# EUROPÄISCHE PATENTSCHRIFT

(11) **EP 1 941 241 B1**
(45) Veröffentlichungstag und Bekanntmachung des Hinweises auf die Patenterteilung: **13.01.2016**
(21) Anmeldenummer: 06806321.3
(22) Anmeldetag: 17.10.2006
(51) Int. Cl.: G01D 5/20

(54) **DREHWINKELSENSOR**
ANGLE OF ROTATION SENSOR
CAPTEUR D'ANGLE DE ROTATION

(30) Priorität: 17.10.2005 DE 102005049545
(43) Veröffentlichungstag der Anmeldung: 09.07.2008
(73) Patentinhaber: KNORR-BREMSE Systeme für Nutzfahrzeuge GmbH, 80809 München (DE)
(72) Erfinder: GIANONE, László, H-1118 Budapest (HU); NEUMAIER, Andrea, 93326 Abensberg (DE); ZÀDOR, István, H-2096 Üröm (HU)
(74) Vertreter: Mattusch, Gundula
(86) Internationale Anmeldenummer: PCT/EP2006/009986
(87) Internationale Veröffentlichungsnummer: WO 2007/045427

(56) Entgegenhaltungen:
- EP-A1- 0 797 078
- DE-A1- 2 836 000
- FR-A1- 2 677 757

## Beschreibung

### Stand der Technik

Die Erfindung geht aus von einem Drehwinkelsensor gemäß dem Oberbegriff von Anspruch 1.

Aus der EP 0 797 078 A1 ist ein Drehwinkelsensor bekannt, bei dem die Spule auf einen kastenförmigen Spulenkörper aus nicht magnetisch leitfähigem Material gewickelt ist, dessen seitliche Öffnungen teilweise durch Bleche aus magnetisch leitfähigem Material bedeckt sind. Das drehbare Element ist dabei fahnenartig an der Welle befestigt und in jeder Drehlage vollständig innerhalb des Spulenkörpers gelagert. Je nach Drehlage überdeckt sich das drehbare Element mit den seitlichen Blechen unterschiedlich. Das lineare Verhalten des Drehwinkelsensors wird dann durch die im wesentlichen lineare Abhängigkeit der Überdeckungsfläche, die sich zwischen dem drehbaren Element und den Blechen bildet, erreicht. Durch eine Drehung der Welle verändert sich die Winkellage des drehbaren Elements und somit auch seine Überdeckungsfläche mit den Blechen, was in einer messbaren Änderung des magnetische Widerstands des magnetischen Kreises und damit der Induktivität resultiert.

Die DE 28 36 000 A1 beschreibt einen induktiven Geber mit einer auf einem U-förmigen Kern aus ferromagnetischem Material aufgebrachten Spule und einer zwischen den Schenkeln des Kerns verschiebbaren, aus magnetisch nicht leitfähigem, aber elektrisch leitfähigem Material bestehenden Kurzschlussplatte.

Gattungsbildende Drehwinkelsensoren sind beispielsweise aus der DE 42 33 549 A1, der DE 197 45 823 A1 und der FR 2 677 757 A1 bekannt.

Der vorliegenden Erfindung liegt die Aufgabe zugrunde, einen Drehwinkelsensor der eingangs erwähnten Art derart weiter zu entwickeln, dass er eine höhere Genauigkeit und eine verbesserte Auflösung gewährleistet.

Diese Aufgabe wird erfindungsgemäß durch die Merkmale von Anspruch 1 gelöst.

### Offenbarung der Erfindung

Indem das magnetisch leitfähige Element in jeder Drehlage stets außerhalb eines von der Spule umgebenen Raumes angeordnet ist, greift es in keiner Drehlage in den von der Spule umschlossenen Raum ein. Die Anmelderin hat durch Versuche herausgefunden, dass dann der Bereich der Eigeninduktivität der Spule vorteilhaft groß ist. Dies bringt den Vorteil mit sich, dass der Drehwinkelsensor eine hohe Genauigkeit und Auflösung aufweist.

Der magnetisch leitfähige Körper ist dabei U-fömig, mit zwei einen Zwischenraum zwischen sich bildenden Schenkeln und einem diese verbindenden Quersteg. Der Begriff "U-förmig" soll im weitesten Sinne verstanden werden, darunter sollen auch alle diejenigen Körper fallen, welche eine Struktur mit wenigstens einer Öffnung aufweisen, in welche das magnetisch leitfähige Element hineinragen kann, also auch beispielsweise C-förmige Querschnitte. Dann kann das magnetisch leitfähige Element abhängig von seiner Drehlage mit unterschiedlichem Überdeckungsgrad zu den Schenkeln in den Zwischenraum hineinragen.

Der magnetisch leitfähige Körper weist im Bereich der Enden seiner Schenkel Lagerstellen für die Welle auf, wobei Letztere vorzugsweise senkrecht zu seinen Schenkeln angeordnet ist.

Durch die in den Unteransprüchen aufgeführten Maßnahmen sind vorteilhafte Weiterbildungen und Verbesserungen der in den unabhängigen Ansprüchen angegebenen Erfindung möglich.

Die Lagerstellen für die Welle sind bevorzugt an Bohrungen der Schenkel ausgebildet.

Gemäß einer Weiterbildung umgibt die Spule wenigstens einen Schenkel und/oder den Quersteg des magnetisch leitfähigen Körpers. Dabei kann die Spule direkt auf den magnetisch leitfähigen Körper oder auf einen Spulenkörper aus einem nicht magnetisch leitfähigen Material gewickelt sein, welcher von dem Körper getragen wird.

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine schematische Seitenansicht eines Drehwinkelsensors;
- Fig.2: eine Draufsicht auf den Drehwinkelsensor von Fig.1;
- Fig.3: eine schematische Seitenansicht eines Drehwinkelsensors;
- Fig.4: eine schematische Seitenansicht eines Drehwinkelsensors gemäß einer weiteren Ausführungsform der Erfindung;
- Fig.5: eine schematische Seitenansicht eines Drehwinkelsensors;
- Fig.6: eine Schnittdarstellung entlang der Linie VI-VI von Fig.5.

### Beschreibung der Ausführungsbeispiele

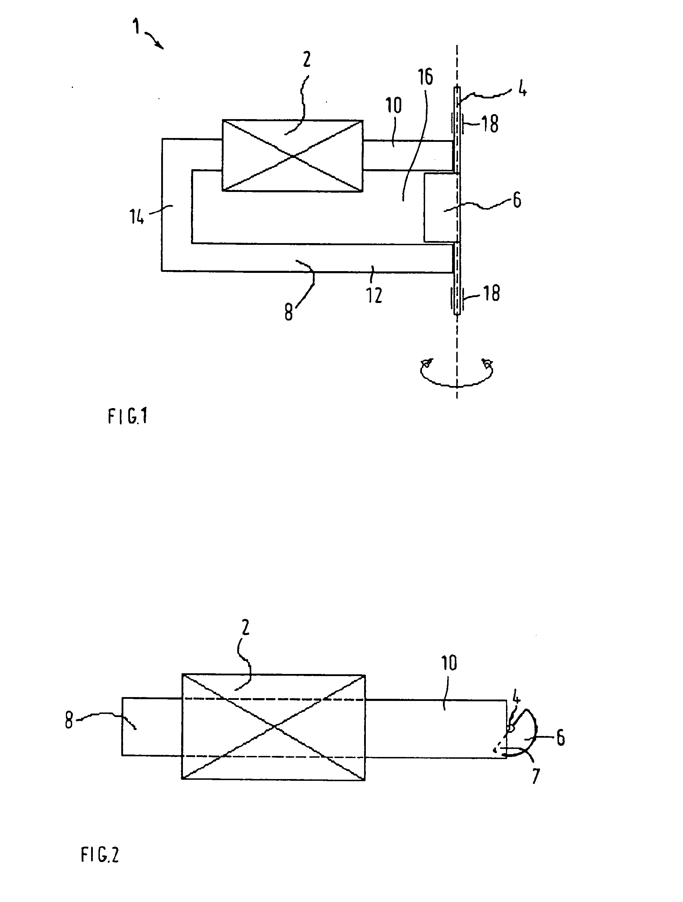

In Fig.1 ist zur beispielhaften Erläuterung der Erfindung ein Drehwinkelsensor 1 gezeigt. Der Drehwinkelsensor 1 dient zur Wandelung einer mechanischen Drehbewegung in ein elektrisches Signal, welches proportional zum Drehwinkel ist, im Rahmen eines berührungslosen Messverfahrens.

Hierzu beinhaltet der Drehwinkelsensor 1 eine mit elektrisch leitfähigen Windungen versehene Spule 2 sowie ein mit dieser zusammenwirkendes, magnetisch leitfähiges und um eine Welle 4 zur Übertragung der zu sensierenden Drehbewegung drehbares Element 6. Dabei umgibt die Spule 2 einen magnetisch leitfähigen Körper 8 zumindest teilweise, der vorzugsweise im wesentlichen U-fömig, mit zwei Schenkeln 10, 12 und einem diese verbindenden Quersteg 14 ausgebildet ist. Unter magnetisch leitfähigem Material soll ferromagnetisches oder weich-magnetisches Material verstanden werden.

Die Welle 4 ist derart angeordnet und das magnetisch leitfähige Element 6 derart ausgebildet, dass das magnetisch leitfähige Element 6 in einen zwischen den Schenkeln 10, 12 ausgebildeten Zwischenraum 16 hineinragen kann und abhängig von seiner Drehlage eine unterschiedliche Überlagerungsfläche 7 mit den Schenkeln 10, 12 aufweist.

Dabei befindet sich das magnetisch leitfähige Element 6 in jeder Drehlage stets außerhalb eines von der Spule 2 umgebenen Raumes und ist von dieser wenigstens geringfügig beabstandet angeordnet. Diesen, von der Spule 2 umgebenen Raum durchragt vielmehr ein Schenkel 10 des magnetisch leitfähigen Körpers 8.

Genauer ist die das magnetisch leitfähige Element 6 tragende Welle 4 senkrecht zu den Schenkeln 10, 12 des magnetisch leitfähigen Körpers 8 angeordnet und liegt den Stirnflächen der Enden dieser Schenkel 10, 12 unmittelbar gegenüber. Die Welle 4 selbst kann dann an externen Lagern 18 drehbar gelagert sein. Das magnetisch leitfähige Element 6 ist vorzugsweise als Sektor eines Kreiszylinders, besonders bevorzugt als Halbzylinder ausgebildet, der fahnenartig an der Welle 4 befestigt ist. Wie am besten aus Fig.2 hervorgeht, ist dann die in Richtung der Welle 4 gesehene Überdeckungsfläche 7 zwischen dem Element 6 und den Schenkeln 10, 12 abhängig von der jeweiligen Drehlage des Elements 6. Alternativ kann das magnetisch leitfähige Material des Elements 6 auch von einem an der Welle 4 befestigten Trägerkörper aus magnetisch nicht leitfähigem Material getragen werden, welcher dem magnetisch leitfähigen Material dann eine höhere Formstabilität verleihen kann.

Zur Erzielung eines möglichst großen Wertebereichs der Induktivität ist es günstig, wenn in wenigstens einer Winkellage des magnetisch leitfähigen Elements 6 eine möglichst geringe Überdeckungsfläche 7 oder überhaupt keine Überdeckung vorhanden ist. Letzteres ist möglich, wenn wie bei dem bevorzugten Ausführungsbeispiel gemäß Fig.1 der Öffnungswinkel des Zylindersektors 3 kleiner gleich 180 Grad, bevorzugt 180 Grad und die Welle außerhalb des von den Schenkeln 10, 12 überdeckten Zwischenraumes 16 angeordnet ist.

Wie oben bereits erwähnt, umgibt die Spule 2 beispielsweise wenigstens einen Teil eines Schenkels 10 des magnetisch leitfähigen Körpers 8. Dabei kann die Spule 2 direkt auf den Schenkel 10 oder auf einen Spulenträger, der aus einem nicht magnetisch leitfähigen Material, beispielsweise aus Kunststoff besteht, gewickelt sein. Dieser Spulenkörper wird dann wiederum von dem Schenkel 10 des magnetisch leitfähigen Körpers 8 getragen.

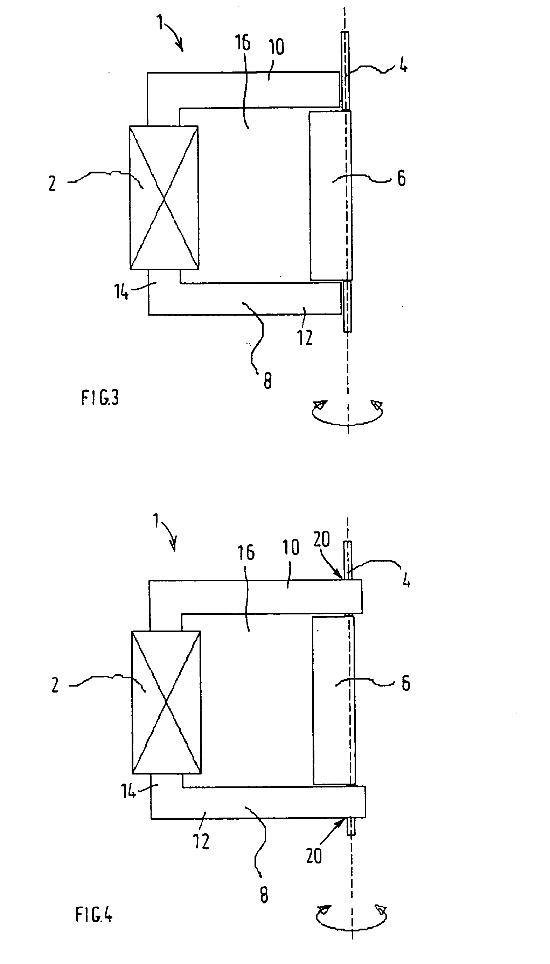

Gemäß einem weiteren, in Fig.3 gezeigten Beispiel ist die Spule 2 um den Quersteg 14 des magnetisch leitfähigen Körpers 8 gewickelt. Ansonsten ist der konstruktive Aufbau wie bei der Ausführungsform von Fig.1. Die Spule 2 kann je nach Anforderung aber auch beide Schenkel 10, 12 und den Quersteg 14 umschlingen. Nicht zuletzt können der Schenkel 10 oder die Schenkel 10, 12 und/oder der Quersteg 14 nicht nur eine, sondern mehrere Spulen 2 tragen. Darüber hinaus können gemäß der Ausführungsform von Fig.4 die Schenkel 10, 12 im Bereich ihrer Enden Lagerstellen 20 für die Welle 4 aufweisen, beispielsweise in Form von Durchgangsbohrungen, durch welche die Welle 4 hindurchragt.

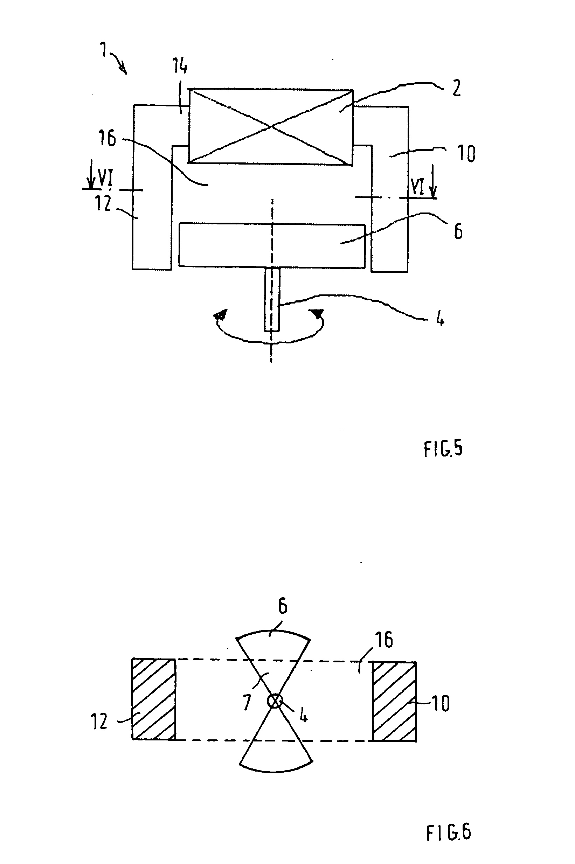

Gemäß einem weiteren, in Fig.5 und Fig.6 gezeigten Beispiel kann die Welle 4 auch parallel zu den Schenkeln 10, 12, vorzugsweise mittig zwischen diesen angeordnet sein und die drehlagenabhängige Überdeckungsfläche 7 zwischen dem Element 6 und den Schenkeln 10, 12 dadurch zustande kommen, dass das Element 6 in einer Ebene senkrecht zur Welle 4 gesehen beispielsweise einen mit radialen Aussparungen versehenen Kreisquerschnitt mit einem Durchmesser oder einer radialen Erstreckung aufweist, welche die Breite der Schenkel 10, 12 in bestimmten Drehlagen überragen kann. Das Element 6 kann daher eine beliebige Form aufweisen, beispielsweise auch eine balkenförmige, entscheidend ist, dass dessen Überdeckungsfläche 7 mit dem zwischen den Schenkeln 10, 12 gebildeten Zwischenraum 16 drehlagenabhängig ist. Weiterhin ist auch bei diesem Ausführungsbeispiel das magnetisch leitfähige Element 6 in jeder Drehlage stets außerhalb eines von der Spule 2 umgebenen Raumes angeordnet, welche beispielsweise um den Quersteg 14 gewickelt ist.

Vor diesem Hintergrund ist die Funktionsweise des erfindungsgemäßen Drehwinkelsensors 1 wie folgt : Durch eine zu sensierende Drehung der Welle 4 in eine beliebige Richtung verändert sich die Winkellage des magnetisch leitfähigen Elements 6 und somit auch seine Überdeckungsfläche 7 mit den ebenfalls magnetisch leitfähigen Schenkeln 10, 12. Diese Veränderung der Überlagerungsfläche 7 verändert die Eigeninduktivität der Spule 2, was zur Signalgewinnung genutzt wird.

Die Erregung der Spule 2 kann beispielsweise durch einen Mikroprozessor erfolgen, welcher rechteckförmige Impulse in die Spule 2 einspeist. Aus der Dauer des Abklingens des Impulses auf einen unteren Grenzwert kann dann die Eigeninduktivität der Spule 2 bestimmt werden. In diesem Fall wird der an der Welle 4 wirkende Drehwinkel mittels einer Zeitmessung bestimmt. Alternativ ist selbstverständlich auch eine Erregung der Spule 2 oder der Spulen durch eine sinusförmige Wechselspannung möglich.

### Bezugszeichenliste

- 1: Drehwinkelsensor
- 2: Spule
- 4: Welle
- 6: Element
- 7: Überdeckungsfläche
- 8: Körper
- 10: Schenkel
- 12: Schenkel
- 14: Quersteg
- 16: Zwischenraum
- 18: Lager
- 20: Lager

## Patentansprüche

1. Drehwinkelsensor (1) beinhaltend wenigstens eine mit Windungen versehene Spule (2) sowie ein mit dieser zusammenwirkendes, magnetisch leitfähiges und mit einer Welle (4) zur Übertragung der zu sensierenden Drehbewegung drehbares Element (6), welches abhängig von seiner Drehlage einen unterschiedlichen Überdeckungsgrad (7) mit wenigstens einem magnetisch leitfähigen Körper (8) aufweist, wobei das magnetisch leitfähige Element (6) in jeder Drehlage stets außerhalb eines von der Spule (2) umgebenen Raumes angeordnet und der magnetisch leitfähige Körper (8) U-fömig, mit zwei einen Zwischenraum (16) zwischen sich bildenden Schenkeln (10, 12) und einem diese verbindenden Quersteg (14) ausgebildet ist, **dadurch gekennzeichnet, dass** der magnetisch leitfähige Körper (8) im Bereich der Enden seiner Schenkel (10, 12) Lagerstellen (20) für die Welle (4) aufweist.

2. Drehwinkelsensor nach Anspruch 1, **dadurch gekennzeichnet, dass** der magnetisch leitfähige Körper (8) einstückig oder mehrstückig ausgebildet ist.

3. Drehwinkelsensor nach Anspruch 2, **dadurch gekennzeichnet, dass** die Welle (4) senkrecht zu den Schenkeln (10, 12) des U-förmigen Körpers (8) angeordnet ist.

4. Drehwinkelsensor nach wenigstens einem der vorhergehenden Ansprüche, **dadurch gekennzeichnet, dass** die Lagerstellen (20) für die Welle (4) an Bohrungen der Schenkel (10, 12) ausgebildet sind.

5. Drehwinkelsensor nach wenigstens einem der vorhergehenden Ansprüche, **dadurch gekennzeichnet, dass** die Spule (2) wenigstens einen Schenkel (10, 12) und/oder den Quersteg (14) des magnetisch leitfähigen Körpers (8) umgibt.

6. Drehwinkelsensor nach wenigstens einem der vorhergehenden Ansprüche, **dadurch gekennzeichnet, dass** die Spule (2) direkt auf den magnetisch leitfähigen Körper (8) oder auf einen Spulenkörper aus einem nicht magnetisch leitfähigen Material gewickelt ist, welcher von dem magnetisch leitfähigen Körper (8) getragen wird.

## Claims

1. Rotation angle sensor (1) containing at least one coil (2) which is provided with turns, as well as an element (6) which interacts with it, is magnetically permeable, can rotate with a shaft (4) for transmission of the rotary movement to be sensed, and has a different coverage degree (7) with at least one magnetically permeable body (8) depending on its rotation position, with the magnetically permeable element (6) always being arranged outside an area that is surrounded by the coil (2) in every rotation position, and with the magnetically permeable body (8) being U-shaped, with two limbs (10, 12) which form an intermediate space (16) between them, and with a lateral web (14) connecting them, **characterized in that** the magnetically permeable body (8) has bearing points (20) for the shaft (4) in the area of the ends of its limbs (10, 12).

2. Rotation angle sensor according to Claim 1, **characterized in that** the magnetically permeable body (8) is formed integrally or from a plurality of pieces.

3. Rotation angle sensor according to Claim 2, **characterized in that** the shaft (4) is arranged at right angles to the limbs (10, 12) of the U-shaped body (8).

4. Rotation angle sensor according to at least one of the preceding claims, **characterized in that** the bearing points (20) for the shaft (4) are formed on holes in the limbs (10, 12).

5. Rotation angle sensor according to at least one of the preceding claims, **characterized in that** the coil (2) surrounds at least one limb (10, 12) and/or the lateral web (14) of the magnetically permeable body (8).

6. Rotation angle sensor according to at least one of the preceding claims, **characterized in that** the coil (2) is wound directly on the magnetically permeable body (8) or on a coil former composed of a material which is not magnetically permeable and is supported by the magnetically permeable body (8).

## Revendications

1. Capteur d'angle de rotation (1) comprenant au moins une bobine (2) dotée de tours ainsi qu'un élément (6) interagissant avec ladite bobine, étant à conductivité magnétique et étant rotatif moyennant un arbre (4) pour la transmission du mouvement de rotation à détecter, lequel élément présente un degré de chevauchement (7) avec au moins un corps (8) à conductivité magnétique, ce degré étant différent en fonction de la position de rotation dudit élément, dans lequel ledit élément à conductivité magnétique (6) est disposé toujours, en chaque position de rotation, en dehors d'un espace entouré par ladite bobine (2) et dans lequel ledit corps (8) à conductivité magnétique est configuré en U à deux branches (10, 12), qui forment un espace (16) y entre, et à une traverse (14), qui relie lesdites branches, **caractérisé en ce que** ledit corps (8) à conductivité magnétique comprend des points d'appui (20) pour ledit arbre (4) dans la zone des extrémités de ses branches (10, 12).

2. Capteur d'angle de rotation selon la revendication 1, **caractérisé en ce que** ledit corps (8) à conductivité magnétique est constitué en une seule pièce ou en plusieurs pièces.

3. Capteur d'angle de rotation selon la revendication 2, **caractérisé en ce que** ledit arbre (4) est disposé orthogonalement sur lesdites branches (10, 12) dudit corps en U (8).

4. Capteur d'angle de rotation selon au moins une quelconque des revendications précédentes, **caractérisé en ce que** lesdits points d'appui (20) pour ledit arbre (4) sont formés aux alésages desdites branches (10, 12).

5. Capteur d'angle de rotation selon au moins une quelconque des revendications précédentes, **caractérisé en ce que** ladite bobine (2) entoure au moins une branche (10, 12) et/ou ladite traverse (14) dudit corps (8) à conductivité magnétique.

6. Capteur d'angle de rotation selon au moins une quelconque des revendications précédentes, **caractérisé en ce que** ladite bobine (2) est enroulé directement sur ledit corps (8) à conductivité magnétique ou sur un corps de bobine en un matériau sans conductivité magnétique, qui est soutenu par ledit corps (8) à conductivité magnétique.
